# EUROPEAN PATENT APPLICATION

(11) **EP 4 206 507 A1**
(43) Date of publication of application: **05.07.2023**
(21) Application number: 21860467.6
(22) Date of filing: 26.08.2021
(51) Int. Cl.: F16K 31/06

(54) **ELECTROMAGNETIC VALVE AND ELECTROMAGNETIC VALVE ASSEMBLY**

(30) Priority: 31.08.2020 CN 202010898470
(71) Applicant: Zhejiang Sanhua Automotive Components Co., Ltd., Hangzhou, Zhejiang 310018 (CN)
(72) Inventor: SHI, Ying, Hangzhou Economic & Technological Development Area Hangzhou, Zhejiang 310018 (CN); XU, Mingjie, Hangzhou Economic & Technological Development Area Hangzhou, Zhejiang 310018 (CN); WANG, Yong, Hangzhou Economic & Technological Development Area Hangzhou, Zhejiang 310018 (CN)
(74) Representative: Maikowski & Ninnemann Patentanwälte Partnerschaft mbB
(86) International application number: PCT/CN2021/114697
(87) International publication number: WO 2022/042633

(57) **Abstract**

An electromagnetic valve and an electromagnetic valve assembly. The electromagnetic valve comprises a valve supporting member (1) and a valve seat (2). The valve supporting member is provided with a first installation portion (10); the valve seat is provided with a second installation portion (20); the valve supporting member and the valve seat are connected by fitting the first installation portion and the second installation portion; the valve seat is further provided with a first recess (29); the electromagnetic valve is sealed with an external valve body (200) by means of a sealing member (80) arranged in the first recess; and the joint of the first installation portion and the second installation portion is located below the first recess, such that the outer diameter of the valve supporting member is limited by the outer diameter of the valve seat, and miniaturization of the electromagnetic valve is thus facilitated.

## Description

This application claims the priority to Chinese Patent Application No. 202010898470.X, titled "ELECTROMAGNETIC VALVE AND ELECTROMAGNETIC VALVE ASSEMBLY", filed with the China National Intellectual Property Administration on August 31, 2020, the entire disclosure of which is incorporated herein by reference.

### FIELD

The present application relates to the technical field of fluid control, and in particular to an electromagnetic valve and an electromagnetic valve assembly.

### BACKGROUND

An electromagnetic valve is the control switch of refrigerant flow in an air conditioning system. How to design the structure of electromagnetic valve to realize the miniaturization of electromagnetic valve and electromagnetic valve assembly is a technical problem to be solved.

### SUMMARY

An electromagnetic valve is provided according to the present application, which is beneficial to the miniaturization of electromagnetic valve and electromagnetic valve assembly.

An electromagnetic valve is provided according to an embodiment of the technical solution of the present application, which includes a valve support, a valve seat, a valve core, and further includes a valve cavity, and a wall forming the valve cavity includes an inner wall of the valve support and an inner wall of the valve seat, at least part of the valve core is positioned in the valve cavity; and the electromagnetic valve includes at least a first channel, a second channel and a valve port, and the first channel is in communication with the valve cavity, and the valve core is movable in the valve cavity to open and close the valve port; and the valve seat includes a first groove formed on an outer wall of the valve seat to accommodate a first sealing member, where the valve support further includes a second groove formed on an outer wall of the valve support to accommodate a second sealing member; and the valve support includes a first mounting part, and the valve seat includes a second mounting part, and the first mounting part is connected with the second mounting part in a fixed or limited manner, and along an axial direction of the electromagnetic valve, the joint of the first mounting part and the second mounting part is located between the first groove and the second groove.

An electromagnetic valve assembly is provided according to another embodiment of the technical solution of the present application, which includes the above electromagnetic valve, and further includes a valve body, and the valve seat further includes a connecting part, where the valve body includes an accommodating part, a first pore passage and a second pore passage, at least part of the electromagnetic valve is located in the accommodating cavity formed by the accommodating part, and the first pore passage is in communication with the first channel, and the second pore passage is in communication with the second channel; and the accommodating part includes a limiting part, and the limiting part cooperates with the connecting part to fix or limit the electromagnetic valve.

The electromagnetic valve and the electromagnetic valve assembly provided by the embodiment of the present application include a valve support and a valve seat, and the valve support has a first mounting part, the valve seat has a second mounting part, the valve support and the valve seat are connected by the cooperation of the first mounting part and the second mounting part, and the valve seat further includes a first groove, and the electromagnetic valve is sealed with the external valve body by arranging a sealing member in the first groove, and the joint of the first mounting part and the second mounting part is located below the first groove, an outer diameter of the valve support is limited by an outer diameter of the valve seat, which is beneficial to the miniaturization of the electromagnetic valve.

### BRIEF DESCRIPTION OF THE DRAWINGS

FIG. 1 is a schematic three-dimensional structural view of a first embodiment of an electromagnetic valve;
FIG. 2 is a schematic cross-sectional view of the first embodiment of the electromagnetic valve;
FIG. 3 is a schematic three-dimensional structural view of a first embodiment of a valve support;
FIG. 4 is a schematic cross-sectional view of the valve support in FIG. 3;
FIG. 5 is a schematic three-dimensional structural view of a first embodiment of a valve seat;
FIG. 6 is a schematic cross-sectional view of the valve seat in FIG. 5;
FIG. 7 is an enlarged schematic view of a partial structure of a first embodiment of part A in FIG. 2;
FIG. 8 is an enlarged schematic view of a partial structure of a second embodiment of part A in FIG. 2;
FIG. 9 is an enlarged schematic view of a partial structure of a third embodiment of part A in FIG. 2;
FIG. 10 is a schematic cross-sectional view of a first embodiment of the cooperation between an electromagnetic valve and a valve body;
FIG. 11 is a schematic cross-sectional view of a second embodiment of the cooperation between the electromagnetic valve and the valve body;
FIG. 12 is a schematic cross-sectional view of a second embodiment of the sealing cooperation between a second groove and the valve body; and
FIG. 13 is a schematic cross-sectional view of a second embodiment of the cooperation between the valve seat and the valve support.

### DETAILED DESCRIPTION OF THE EMBODIMENTS

The present application is further illustrated hereinafter in conjunction with drawings and specific embodiments.

In the following description of the embodiments, in order to facilitate understanding, terms indicating directions (for example, "above", "below", etc.) are appropriately used, taking the electromagnetic valve as an example, to define that a coil assembly is located above the valve seat, and an axial direction of the sleeve is taken as an axial direction of the electromagnetic valve.

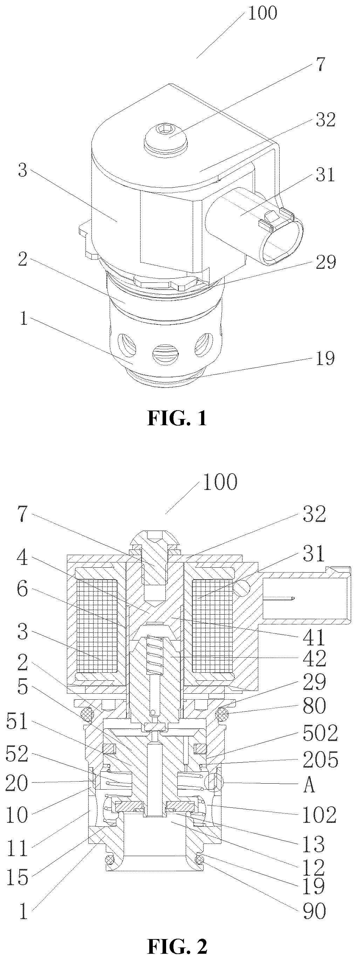

Referring to FIG. 1 and FIG. 2, the electromagnetic valve 100 includes a valve support 1, a valve seat 2, a coil assembly 3, an iron core assembly 4, and a valve member 5, the valve support 1 is connected with the valve seat 2 in a fixed or limited manner, at least part of the valve seat 2 is located above the valve support 1, at least part of the valve member 5 is located in the cavity formed by the connection of the valve support 1 and the valve seat 2. The electromagnetic valve 100 further includes a sleeve 6, part of the sleeve 6 is located above the valve seat 2, one end of the sleeve 6 inserts into the hole formed by the valve seat 2 and is relatively fixed with the valve seat 2, the fixing manner can be welding, bonding or integrated setting. At least part of the iron core assembly 4 is located on an inner periphery of the sleeve 6, specifically, the iron core assembly 4 includes a static iron core 41 and a movable iron core 42, at least part of the static iron core 41 is arranged in the sleeve 6 and relatively fixed with an inner wall of the sleeve 6 by welding or riveting, at least part of the movable iron core 42 is arranged in the sleeve 6, and the movable iron core 42 can move along an axial direction of the sleeve 6 relative to the static iron core 41, in this embodiment, the movable iron core 42 is closer to the valve seat 2 than the static iron core 41, in other embodiments, the static iron core 41 may be closer to the valve seat 2 than the movable iron core 42. The coil assembly 3 is sleeved on the periphery of the sleeve 6, specifically, the coil assembly 3 includes a coil part 31 and a magnetizer 32, and the coil part 31 is fixed with the magnetizer 32 by clamping, both the coil part 31 and the magnetizer 32 are provided with through holes, and the through hole of the coil part 31 is coaxially arranged with the through hole of the magnetizer 32, the sleeve 6 is located in the through hole of the coil part 31 and the through hole of the magnetizer 32. In a specific embodiment, the coil assembly 3 is screwed with the static iron core 41 by screws 7 to realize the limited connection between the coil assembly 3 and the iron core assembly 4. Of course, in other embodiments, the coil assembly 3 may also be connected with the iron core assembly 4 in a limited manner by clamping pieces.

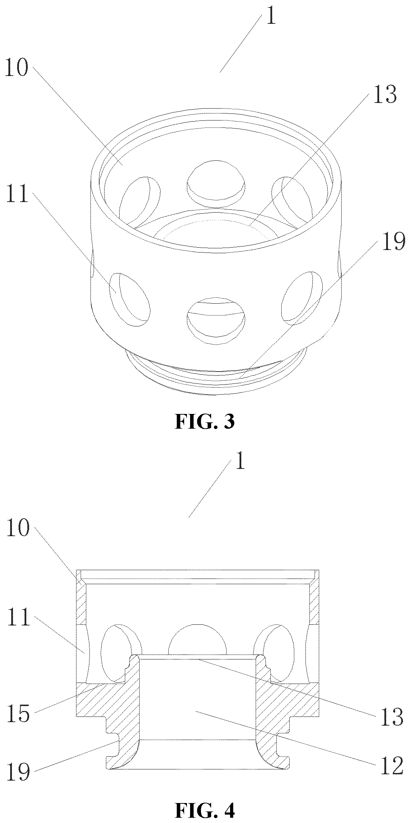

Referring to FIG. 2, FIG. 3, FIG. 4, FIG. 5 and FIG. 6, the electromagnetic valve 100 includes a valve cavity 102, and the wall forming the valve cavity 102 includes at least an inner wall of the valve support 1 and an inner wall of the valve seat 2. The electromagnetic valve 100 is further provided with a first channel 11, a second channel 12 and a valve port 13, and the first channel 11, the second channel 12 and the valve port 13 are formed in the valve support 1. Specifically, the first channel 11 runs through the side portion of the valve support 1, two openings are formed in the first channel 11 at the side portion of the valve support 1, one opening is located on an outer wall of the valve support 1, and the other opening is located on an inner wall of the valve support 1, or, the other opening is located in the wall forming the valve cavity 102, and the first channel 11 is in communication with the valve cavity 102; the second channel 12 is formed at the bottom of the valve support 1 and the second channel 12 forms an opening at the bottom of the valve support 1, furthermore, the second channel 12 has an opening in the lower wall of the valve support 1, and the valve port 13 is formed in the upper wall of the bottom of the valve support 1; when the valve port is opened, the second passage 12 can be communicated with the valve cavity 102 through the valve port 13.

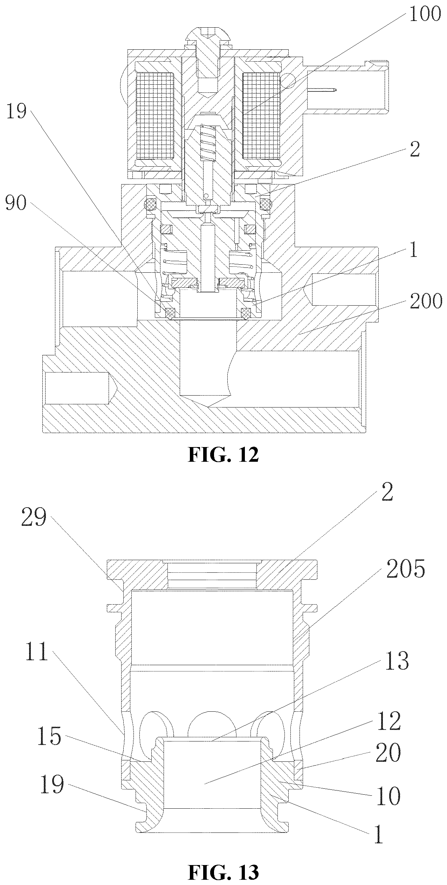

In other embodiments, the first channel 11 may also be formed in the valve seat 2, the first channel 11 is formed with two openings at the side portion of the valve seat 2, as shown in FIG. 13, which is not described in detail. Of course, the side portion of the valve support 1 or the valve seat 2 may be formed with multiple first channels 11, the first channels 11 are circumferentially distributed along the side portion of the valve support 1 or the valve seat 2, so as to reduce the flow resistance of refrigerant into the valve cavity 102.

The valve member 5 is located in the valve cavity 102, and at least part of the valve member 5 can move along an axial direction of the sleeve 6 in the valve cavity 102; specifically, the valve member 5 includes a valve core 51, the valve seat 2 includes a guide part 205, and the valve core 51 includes a sliding part 502; when the valve core 51 moves, the sliding part 502 is slidably matched with the guide part 205 to prevent the valve core 51 from moving away from the axis of the sleeve 6. The valve member 5 further includes an elastic element 52, and the valve support 1 further includes a support part 15, the support part 15 are formed on an upper wall of the bottom of the valve support 1 and distributed along a circumferential direction of the second channel 12, along an axial direction of the sleeve 6, one end of the elastic element 52 abuts against the valve core 51, and the other end of the elastic element 52 abuts against the support part 15. The support part 15 provides support for the elastic element 52, and the elastic element 52 provides support for the valve core 51, the elastic element 52 may provide a restoring force for the valve core 51. The valve support 1 is connected with the valve seat 2 in a limited or fixed manner, and the valve member 5 is accommodated in the valve cavity 102. The components of the electromagnetic valve 100 are connected and fixed together to form an integral piece, which is beneficial to the rapid installation of the electromagnetic valve 100 and other components, other parts can be valve bodies with refrigerant flow channels. In this embodiment, the elastic element 52 is a tower spring, it is known that the elastic element 52 may also be a cylindrical spring or other structure, of course, the elastic element 52 may also be an elastic element made of polyurethane or other elastic elements. Further, the elastic element 52 can be fixed with the valve core 5, and the elastic element 52 can also be fixed with the support part 15, the fixing manner can be clamping or welding, so as to prevent the elastic element 52 from shifting when the electromagnetic valve 100 works, thereby improving the reliability of the electromagnetic valve 100. In addition, the valve core 51 can open or close the valve port 13 during the movement in the valve cavity 102 to control the on-off of the electromagnetic valve, specifically, when the valve core 51 opens the valve port 13, the valve cavity 102 is communicated with the second channel 12 through the valve port 13, thereby realizing the communication between the first channel 11 and the second channel 12; when the valve core 51 closes the valve port 13, the valve cavity 102 is not communicated with the second channel 12, and thus the first channel 11 is not communicated with the second channel 12.

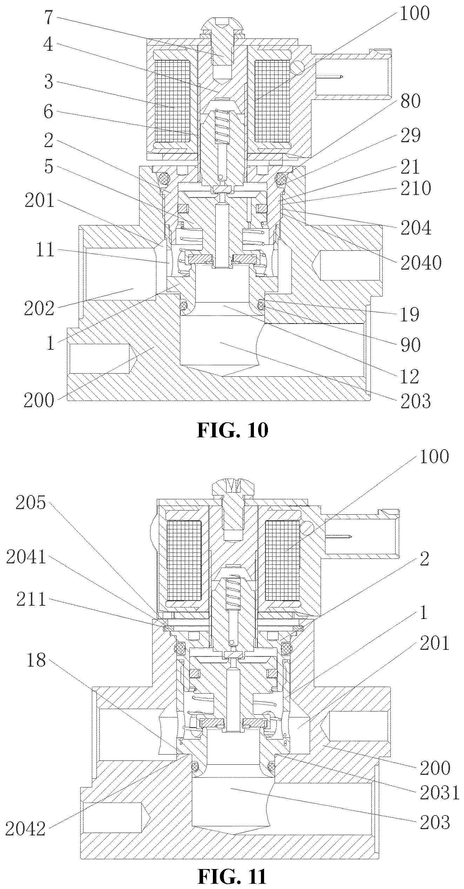

Referring to FIG. 2, FIG. 4, FIG. 6, FIG. 10 and FIG. 11, the valve seat 2 includes a first groove 29. Along the axial direction of the electromagnetic valve 100, the first groove 29 is located on the side, close to the coil assembly 4, of the valve seat 2, the first groove 29 is formed in the outer wall of the valve seat 2, specifically, the first groove 29 is formed in the side wall of the valve seat 2, the first groove 29 has an opening in the side wall of the valve seat 2, the first groove 29 is recessed relative to the side wall of the valve seat 2, the first groove 29 is arranged along a circumference of the side wall of the valve seat 2, further, the electromagnetic valve 100 further includes a first sealing member 80, at least part of the first sealing member 80 is arranged in the first groove 29, after the electromagnetic valve 100 is mounted with other components, the valve seat 2 and other component squeeze the first sealing member 80, thus forming the seal between other component and the valve seat 2, as shown in FIG. 10, the other component may be a valve body 200.

The valve support 1 includes a second groove 19, along the axial direction of the electromagnetic valve 100, the second groove 19 is located on the side of the valve support 1 away from the valve seat 2, and the second groove 19 is formed on the outer wall of the valve support 1; specifically, the second groove 19 is formed in the side wall of the valve support 1, and the second groove 19 has an opening in the side wall of the valve support 1; the second groove 19 is recessed relative to the side wall of the valve support 1, and the second groove 19 is arranged along a circumference of the side wall of the valve support 1; furthermore, the electromagnetic valve 100 further includes a second sealing member 90, at least part of the second sealing member 90 is arranged in the second groove 19; after the electromagnetic valve 100 is mounted with other components, the valve support 1 and other components squeeze the second sealing member 90, thus forming the seal between the other components and the valve support 1, as shown in FIG. 10, the other component may be a valve body 200.

Of course, in another embodiment, the second groove 19 may also be formed in the bottom wall of the valve support 1, and the second groove 19 has an opening in the bottom wall of the valve support 1, the second groove 19 is recessed relative to the bottom wall of the valve support 1, and is arranged along the circumferential direction of the second channel 12, a second sealing member 90 is arranged in the second groove 19, and then the second sealing member 90 abuts against the valve body 200 to realize the sealing between the electromagnetic valve 100 and the valve body 200. It is known that in this embodiment, the second sealing member 90 is in interference fit with the second groove 19; or, the second sealing member 90 is embedded into the second groove 19 through a rubber vulcanization process, in this way, the second sealing member can be prevented from slipping during installation, the installation efficiency can be improved, and the sealing performance can also be enhanced, as shown in FIG. 12. It can be known that the first channel 11 is located between the first groove 29 and the second groove 19 in the axial direction of the electromagnetic valve 100, which helps to prevent the refrigerant from leaking during the operation of the electromagnetic valve 100.

Referring to FIG. 2, FIG. 4 and FIG. 6, the valve support 1 is fixedly connected with the lower end of the valve seat 2, specifically, the valve support 1 includes a first mounting part 10 formed on the outer wall of the valve support 1, the first mounting part 10 is located at one end of the valve support 1 relatively close to the valve seat 2, or, the first mounting part 10 is located at the upper end of the valve support 1; correspondingly, the valve seat 2 includes a second mounting part 20 formed on the outer wall of the valve seat 2, the second mounting part 20 is located at one end, close to the valve support 1, of the valve seat 2; or, the second mounting part 20 is located at the lower end of the valve seat 2, the first mounting part 10 is matched with the second mounting part 20 for fixed connection or limited connection, the joint of the first mounting part 10 and the second mounting part 20 is located between the first groove 29 and the second groove 19; in this way, there is no need to consider the sealing problem between the first mounting part 10 and the second mounting part 20, so that the structure of the electromagnetic valve 100 is relatively simplified and the number of components of the electromagnetic valve is reduced. In this embodiment, the first groove 29 is formed in the valve seat 2, and the first groove 29 is matched with the valve body 200 to form a seal; compared with the embodiment that the first groove 29 is formed in the valve support 1, the overall radial size of the electromagnetic valve 100 is reduced, which is beneficial to the miniaturization of the electromagnetic valve; the valve support 1 is connected and fixed to the lower end of the valve seat 2, in this way, it is advantageous to reduce the axial length of the electromagnetic valve 100, thus being advantageous to the miniaturization of the electromagnetic valve 100. It can be known that along the axial direction of the electromagnetic valve 100, when the first channel 11 is formed on the valve seat 2, the first channel 11 is located between the first groove 29 and the second mounting part 20, or, the first channel 11 is farther away from the valve support 1 than the second mounting part 20, as shown in FIG. 2; when the first channel 11 is formed in the valve support 1, the first channel 11 is located between the first mounting part 10 and the second groove 19; or, the first channel 11 is farther away from the valve seat 2 than the first mounting part 10, as shown in FIG. 13, which is beneficial to make the refrigerant flow more stable.

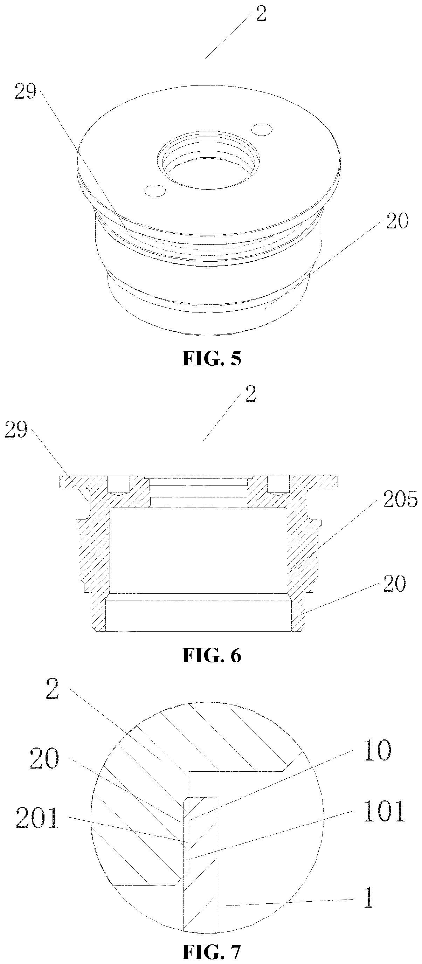

In addition, the first mounting part 10 and the second mounting part 20 may have multiple connecting manners, which is beneficial to improve the practicability of the electromagnetic valve 100. In the first embodiment, with reference to FIG. 2 and FIG. 7, the valve support 1 and the valve seat 2 are screwed to be relatively fixed. Specifically, the first mounting part 10 is shaped as a first internal thread 101, the second mounting part 20 is shaped as a first external thread 201, where the first internal thread 101 is located on the inner side wall of the valve support 1, and the first external thread 201 is located on the outer side wall of the valve seat 2; under the action of the first internal thread 101 and the first external thread 201, the first mounting part 10 is screwed with the second mounting part 20, thus realizing the detachable connection between the valve support 1 and the valve seat 2. Of course, in other embodiments, the first mounting part 10 may also be shaped as a first external thread 201, which is located on the outer side wall of the valve support 1, the second mounting part 20 may also be shaped as a first internal thread 101, the first internal thread 101 is located on the inner side wall of the valve seat 2, the first mounting part 10 is screwed with the second mounting part 20, which is not described in detail.

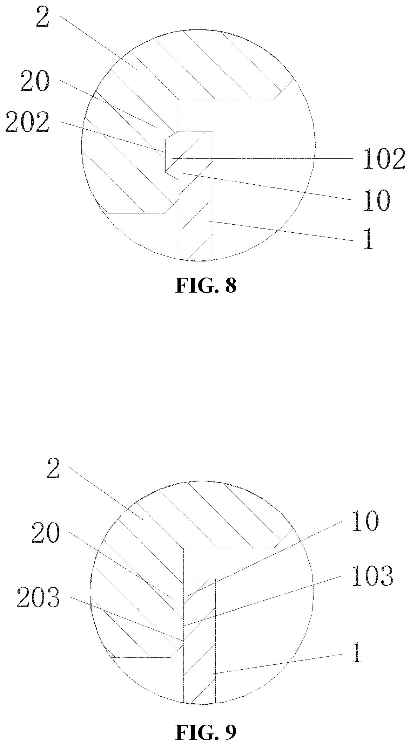

In the second embodiment, with reference to FIG. 2 and FIG. 8, the valve support 1 and the valve seat 2 are relatively fixed by clamping. Specifically, the first mounting part 10 is shaped as a first convex part 102, the second mounting part 20 is shaped as a first concave part 202, the first convex part 102 is located on the inner wall of the valve support 1 and distributed along a circumferential direction of the first mounting part 20, the first concave part 202 is located on the side wall of the valve seat 2 and distributed along a circumferential direction of the second mounting part 20, the first convex part 102 is accommodated in the first concave part 202, the first mounting part 10 is clamped with the second mounting part 20, so that the valve support 1 can be detachably connected with the valve seat 2. Of course, in other embodiments, the first convex part 102 may be provided in the second mounting part 20, and the first concave part 202 may be provided in the first mounting part 10, that is, the first mounting part 10 is shaped as the first concave part 202, and the second mounting part 20 is shaped as the first convex part 102, which is not described in detail.

In the third embodiment, with reference to FIG. 2 and FIG. 9, the valve support 1 and the valve seat 2 are fixed by welding. Specifically, the first mounting part 10 has a first abutting surface 103, and the second mounting part 20 has a second abutting surface 203; and the first abutting surface 103 is formed on the outer wall of the valve support 1, and the second abutting surface 203 is formed on the outer wall of the valve seat 2; the first abutting surface 103 is opposite to the second abutting surface 203, the first abutting surface 103 abuts against the second abutting surface 203, and solder is injected into the abutting surfaces of the first abutting surface 103 and the second abutting surface 203 for fixing by welding, thereby realizing the fixed connection between the valve support 1 and the valve seat 2. In other embodiments, fixing glue can be injected into the abutting surface of the first abutting surface 103 and the second abutting surface 203 for fixing by bonding. Of course, rubber may be vulcanized between the first abutting surface 103 and the second abutting surface 203, and the valve support 1 and the valve seat 2 may be fixed by the adhesive force of the rubber. In other embodiments, the valve seat 2 and the support 1 may also be fixed by riveting or screw connection, which is not described in detail. The valve support 1 and the valve seat 2 are fixed by welding, and it is unnecessary to change the structure of the valve seat 2. In actual production, the valve seat of the conventional electromagnetic valve can be used for assembly and adaptation, which improves the practicability of the electromagnetic valve 100 and is beneficial to further improve the production efficiency.

An electromagnetic valve assembly is further provided according to an embodiment of the technical solution of the present application, which includes an electromagnetic valve 100 and a valve body 200, the electromagnetic valve 100 is connected with the valve body 200 in a fixed or limited manner, specifically, the electromagnetic valve 100 includes a connecting part 21 formed on the valve seat 2, the electromagnetic valve is fixedly connected or limitedly connected with the valve body 200 through the connecting part 21. Referring to FIG. 10, the valve body 200 includes an accommodating part 201, a first pore passage 202 and a second pore passage 203, at least part of the electromagnetic valve 100 is located in the accommodating cavity formed by the accommodating part 201, and the first pore passage 202 is in communication with the first channel 11, and the second pore passage 203 is in communication with the second channel 12, where the accommodating part 201 includes a limiting part 204, and the limiting part 204 cooperates with the connecting part 21 to fix or limit the electromagnetic valve 100. In this embodiment, along the axial direction of the electromagnetic valve 100, the connecting part 21 is located between the first groove 29 and the second mounting part 20, the connecting part 21 is shaped as a second external thread 210, the limiting part 204 is shaped as a second internal thread 2040, the second internal thread 2040 is matched with the second external thread 210, and the electromagnetic valve 100 is mounted on the valve body 200, in this way, the installation steps can be simplified, the operation is simple, the electromagnetic valve can be quickly mounted, and the maintenance and replacement of the electromagnetic valve are convenient; it can be known that the electromagnetic valve 100 and the valve body 200 can be fixedly connected by different methods such as welding.

In another embodiment of the technical solution of the present application, referring to FIG. 11, the main difference from the above embodiment is that: the limiting part 204 includes a first sub-limiting part 2041 and a second sub-limiting part 2042, the connecting part 21 includes a clamp spring 211, and the clamp spring 211 is separately arranged with the electromagnetic valve 100, the electromagnetic valve assembly fixes the electromagnetic valve 100 to the valve body 200 through the clamp spring 211. Specifically, the valve body 200 includes a first concave part 205, the first sub-limiting part 2041 is shaped as an upper wall of the first concave part 205; the second pore passage 203 has a first orifice 2031 in a bottom wall of the accommodating part 201, the second sub-limiting part 2042 is shaped as a bottom wall of the accommodating part 201 and distributed along the first orifice 2031 in a circumferential direction.

At least part of the clamp spring 211 is located in the first concave part 205, at least part of an upper end surface of the clamp spring 211 abuts against the first sub-limiting part 2041, at least part of a lower end surface of the clamp spring 211 abuts against an upper wall of the valve seat 2. The upper end surface of the clamp spring 211 abuts against the first sub-limiting part 2041 to prevent the electromagnetic valve from moving away from the valve support 1, the lower end surface of the clamp spring 211 abuts against the upper wall of the valve seat 2, which is beneficial for the clamp spring 211 to exert downward force on the electromagnetic valve 100, so that the electromagnetic valve 100 abuts against the valve body. The valve support 1 further includes an abutting part 18, the abutting part 18 is located on the side of the valve support 1 away from the valve seat 2, and the abutting part 18 is closer to the valve seat 2 than the second groove 19; the abutting part 18 abuts against the second sub-limiting part 2042 to limit the movement of the electromagnetic valve 100 toward the second orifice 203.

The clamp spring 211 has elasticity in the radial direction, so that the side wall of the clamp spring 211 abuts against the side wall of the first concave part 205, and the clamp spring 211 can be relatively fixed; furthermore, the clamp spring 211 may also have elasticity in the axial direction, and the clamp spring 211 exerts a downward preload on the electromagnetic valve 100, which can make the fixation of the electromagnetic valve 100 and the valve body 200 more stable. The electromagnetic valve assembly mounts the electromagnetic valve 100 on the valve body 200 through the clamp spring, which can simplify the installation steps, simplify the operation and facilitate the maintenance and replacement of the electromagnetic valve assembly.

Or, in other embodiments, the clamp spring 211 may also be replaced by a compression nut, and the electromagnetic valve assembly fixes the electromagnetic valve 100 to the valve body 200 through the compression nut. Or, the electromagnetic valve 100 is provided with a flange connection structure at the valve seat, and the electromagnetic valve 100 is flanged with the valve body 200, which is not described in detail.

Technical features of the foregoing embodiments may be combined freely. For conciseness of description, all possible combinations of the technical features of the foregoing embodiments are not described. However, as long as there is no contradiction in the combinations of these technical features, they shall fall within the scope of this specification.

Although the present application is described in detail hereinabove with reference to the above embodiments, those of ordinary skill in the art should understand that modification or equivalent replacement may be made to the present application, and all technical solutions and improvements thereof that do not depart from the spirit and scope of the present application should be covered by the scope of the claims of the present application.

## Claims

1. An electromagnetic valve, comprising a valve support, a valve seat, a valve core, and further comprising a valve cavity, wherein a wall forming the valve cavity comprises an inner wall of the valve support and an inner wall of the valve seat, at least part of the valve core is located in the valve cavity; the electromagnetic valve comprises at least a first channel, a second channel and a valve port, and the first channel is in communication with the valve cavity, and the valve core is movable in the valve cavity to open and close the valve port;
wherein the valve seat comprises a first groove formed on an outer wall of the valve seat to accommodate a first sealing member, the valve support further comprises a second groove formed on an outer wall of the valve support to accommodate a second sealing member; the valve support comprises a first mounting part, and the valve seat comprises a second mounting part, the first mounting part is connected with the second mounting part in a fixed or limited manner, and along an axial direction of the electromagnetic valve, a joint of the first mounting part and the second mounting part is located between the first groove and the second groove.

2. The electromagnetic valve according to claim 1, wherein along the axial direction of the electromagnetic valve, the first channel is located between the first groove and the second groove;
wherein the first channel is formed in the valve seat, and the first channel is farther away from the valve support than the second mounting part, or, the first channel is formed in the valve support, and the first channel is farther away from the valve seat than the first mounting part.

3. The electromagnetic valve according to claim 1 or 2, wherein along the axial direction of the electromagnetic valve, the first groove is formed on a side wall of the valve seat, and the first groove has an opening on the side wall of the valve seat; the second groove is formed on a side wall of the valve support or a bottom wall of the valve support.

4. The electromagnetic valve according to claim 3, wherein the first mounting part is located at one end, close to the valve seat, of the valve support, and the first mounting part is formed on an outer wall of the valve support; the second mounting part is located at one end, close to the valve support, of the valve seat, and the second mounting part is formed on an outer wall of the valve seat.

5. The electromagnetic valve according to claim 4, wherein the first mounting part is shaped as a first convex part, and the second mounting part is shaped as a first concave part; or, the first mounting part is shaped as a first concave part, and the second mounting part is shaped as a first convex part; the first convex part is located in the first concave part, wherein the first convex part is closely matched with the first concave part to connect the first mounting part with the second mounting part.

6. The electromagnetic valve according to claim 4, wherein the first mounting part is shaped as a first internal thread, and the first internal thread is located on an inner side wall of the valve support, the second mounting part is shaped as a first external thread, and the first external thread is located on an outer side wall of the valve seat, the first mounting part is in threaded connection with the second mounting part;
or, the first mounting part is shaped as a first external thread, and the first external thread is located on an outer side wall of the valve support, the second mounting part is shaped as a first internal thread, and the first internal thread is located on an inner side wall of the valve seat, the first mounting part is in threaded connection with the second mounting part.

7. The electromagnetic valve according to claim 4, wherein the first mounting part has a first abutting surface, and the second mounting part has a second abutting surface; the first abutting surface is opposite to the second abutting surface, and the first abutting surface and the second abutting surface are fixed by welding or bonding.

8. The electromagnetic valve according to any one of claims 5 to 7, further comprising an elastic element, wherein along the axial direction of the electromagnetic valve, one end of the elastic element abuts against the valve core, and the other end of the elastic element abuts against a bottom wall of the valve cavity;
wherein the electromagnetic valve comprises an iron core assembly, a coil assembly and a sleeve, the sleeve is fixedly connected with the valve seat, the coil assembly sheathes on the periphery of the sleeve, and at least part of the iron core assembly is located in the sleeve.

9. An electromagnetic valve assembly, comprising the electromagnetic valve according to any one of claims 1 to 8, and further comprising a valve body, wherein the valve seat further comprises a connecting part, the valve body comprises an accommodating part, a first pore passage and a second pore passage, at least part of the electromagnetic valve is located in the accommodating cavity formed by the accommodating part, the first pore passage is in communication with the first channel, and the second pore passage is in communication with the second channel;
wherein the accommodating part comprises a limiting part, and the limiting part is matched with the connecting part to fix or limit the electromagnetic valve.

10. The electromagnetic valve assembly according to claim 9, wherein along the axial direction of the electromagnetic valve, the connecting part is located between the first groove and the second mounting part;
wherein the limiting part is shaped as a second internal thread, the connecting part is formed as a second external thread, the second external thread is in threaded connection with the second internal thread.

11. The electromagnetic valve assembly according to claim 9, wherein the limiting part comprises a first sub-limiting part and a second sub-limiting part, wherein the connecting part comprises a clamp spring, and the clamp spring is separately arranged with the electromagnetic valve, wherein the valve body comprises a first concave part, at least part of the clamp spring is located in the first concave part, and the first sub-limiting part is the upper wall of the first concave part, wherein the upper end surface and the lower end surface of the clamp spring respectively abut against the first sub-limiting part and the upper wall of the valve seat;
wherein the valve support further comprises an abutting part, and the abutting part is located at a lower end of the valve support, wherein the second pore channel has a first orifice on an inner wall of the accommodating part, wherein the second sub-limiting part is formed on the bottom wall of the accommodating part and distributed along a circumference of the first orifice, wherein the abutting part abuts against the second sub-limiting part.

12. The electromagnetic valve assembly according to any one of claims 9 to 11, wherein the electromagnetic valve assembly further comprises a first sealing member, at least part of the first sealing member is positioned in the first groove, the first sealing member contacts the first groove and the wall of the accommodating part;
wherein the electromagnetic valve assembly further comprises a second sealing member, at least part of the second sealing member is positioned in the second groove, the second sealing member contacts the second groove and the wall forming the accommodating part or the second pore passage.
